# EUROPEAN PATENT APPLICATION

(11) **EP 1 986 454 A1**
(43) Date of publication of application: **29.10.2008**
(21) Application number: 07008556.8
(22) Date of filing: 26.04.2007
(51) Int. Cl.: H04Q 7/38

(54) **A method and a system for initalizing a handover of a mobile station**

(71) Applicant: Nokia Siemens Networks Oy, 02610 Espoo (FI)
(72) Inventor: Eichinger, Josef Martin, 85464 Neufinsing (DE); Plyaskin, Roman, 81243 München (DE); Schulz, Egon, Dr., 80993 München (DE)
(74) Representative: Bruglachner, Thomas E.

(57) **Abstract**

A system for initializing a handover (HO) of a mobile station (MS) of a cellular wireless network comprising a plurality of cells each having at least one base station (3), wherein a source base station (3-0) to which said mobile station (2) is registered transmits directly or indirectly a handover request (HO-REQ) to other target base stations (3-1; 3-2) via a backbone network.

## Description

The invention relates to a method and a system for initializing a handover of a mobile station in a cellular wireless network.

A cellular wireless network comprises a plurality of cells each having at lest one base station for providing a bidirectional link with user entities or mobile stations within the respective cell. The base station transmits data to the mobile stations in a downlink and receives data from the mobile station in an uplink. The handover or handoff refers to a process of transferring an on-going call or data session from one channel connected to the core network to another.

There are different reasons for performing a handoff (i. e. handover). If the mobile station is moving away from an area covered by one cell and enters an area covered by another cell, the telephone call or a data session is transferred to the second cell in order to avoid call or session or connection termination when the mobile station gets outside the range of the first cell. Another reason for performing a handover is when the capacity for connecting new calls or sessions in a given cell is used up and an existing or new call from the mobile station is transferred to said cell in order to free-up some capacity in the first cell for other users who can only connect to said cell. A further possible reason for performing a handover is when the channel used by the mobile station becomes interfered by another mobile station using the same channel in a different cell. In this scenario, the call is transferred to a different channel in the same cell or to a different channel in another cell in order to avoid interference.

In a handover, a call (connection, session, etc)is redirected from its current cell, i. e. source cell, to a new cell also called target cell. Such a handoff in which the source and target are different cells is also called inter-cell handover. The purpose of an inter-cell handover is to maintain the call as the subscriber is moving out of the area covered by a source cell and entering the area of a target cell. Depending on the size of a cell and the velocity of the mobile station, the handover is performed more or less frequently. A handover consumes resources of the cellular network and, furthermore, the signalling via the backbone network increases the data load in this backbone network. With increasing velocity of the mobile stations and the diminishing size of the cells, the additional load for the backbone network is further increased. The increased data traffic in the backbone network consumes the capacity of the network for other users.

A mobile station measures signal strengths of signals received from base stations. If the property of the received signal is low, a change from one cell to another cell becomes necessary and the mobile station sends a handover request to a new cell, i. e. a target cell which accepts or rejects the handover request. If the handover request of a mobile station is rejected, the mobile station can either stay with the actual base station or can loss the connection it or in case of overlapping cells, the mobile station can send a new handover to another cell. In a central organized network, such as UMTS, this can be handled since the decision about the handover request is performed in the RNC. However, in a decentrally organized cellular wireless networks, such as 3G-LTE networks or IEEE based radio systems such a central network element is not provided and the base stations have to decide for themselves at what time the handover and to which target base station the handover has to be performed. This decision is performed on the basis of measurements which the mobile station performs on its own motion or in response to a request of the base station.

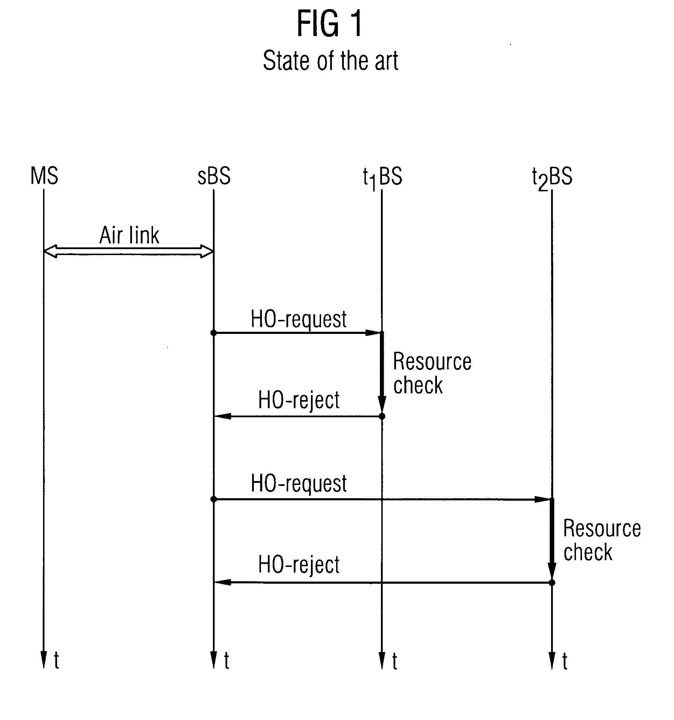

Figure 1 shows a signal diagram illustrating the initialization of a handover in a conventional system according to the state of the art.

Between the mobile station MS and a source base station sBS, e. g. the actual base station, an air link is established. The source base station sBS sends a handover request to a possible target base station t₁BS which checks its resources and rejects the handover requests by a HO-reject message which indicates that sufficient resources are not available. After having received the rejection for the handover from the first target base station t₁BS, the source base station sBS sends another handover request to another possible target base station t₂BS which may again reject the handover request of the source base station sBS. The transmission of the messages between the base stations BS is performed via a backbone network thus increasing the data traffic and the load in the respective backbone network. As can be seen from figure 1, when a HO-request is rejected, the whole procedure has to be repeated. Consequently, the signalling and data processing load is very high. This is even more critical when decentral radio networks have an IP-based transport network, wherein the cell-ID of a base station is known but not the IP-address. The look-up of the IP-address leads to a further consumption of resources thus increasing the load in the backbone network. Furthermore, time delays for performing a handover are increased significantly.

Accordingly, it is an object of the present invention to provide a method and a system for initializing a handover of a mobile station in a cellular wireless network, wherein the signalling load in the network is minimized.

This object is achieved by a method having the features of claim 1.

The invention provides a method for initializing a handover of a mobile station in a cellular wireless network, wherein a source base station to which a mobile station is registered transmits directly or indirectly a handover request to other target base stations via a backbone network.

In an embodiment of the method according to the present invention, a handover request is transmitted directly to a first target base station, wherein upon rejection of said handover request, the handover request is forwarded by the first target base station to another available target base station wherein a handover response is transmitted by an available target base station to the source base station.

In an embodiment of the method according to the present invention, the handover request comprises a cell identifier of the first target base station and parameters of other target base stations measured by the mobile station.

In an embodiment of the method according to the present invention, the handover request is forwarded by a forwarding message comprising an address of said source base station.

In an embodiment of the method according to the present invention, the available target base station transmits the handover response directly to the source base station.

In an embodiment of the method according to the present invention, the available target base station transmits the handover response via the first target base station to the source base station.

In an embodiment of the method according to the present invention, the handover method e.g. multicast, multiple unicast etc. can be different depending of the requirements of the services like minimal delay etc.

In an embodiment of the method according to the present invention, a handover request or response can be transmitted also over the air if the source base station is connected to the target base stations over the air e.g. in case of multi hop or meshed networks

In a further embodiment of the method according to the present invention, a first handover request is transmitted from the source base station to at least one first target base station, wherein upon rejection of the received first handover request by the first target base station addresses and resource information data of other target base stations are transmitted by the first target base station to the source base station, and wherein a second handover request is transmitted by the source base station to an available target base station, wherein a handover response is transmitted by an available target base station to the source base station.

In a further embodiment of the method according to the present invention, a multicast handover request is transmitted by the source base station to several target base stations belonging to a multicast group, wherein a handover response is transmitted by an available target base station of the multicast group back to the source base station.

In a further embodiment of the method according to the present invention, multiple unicast handover requests are transmitted from the source base station to several target base stations, wherein a handover response having resource information data of the target base station is transmitted by at least one available target base station to said source base station, wherein an available target base station is selected by the source base station.

In a possible embodiment of the method according to the present invention, the cellular wireless network is formed by a decentral cellular wireless network.

In a possible embodiment of the method according to the present invention, the cellular wireless network is formed by a mobile radio wireless network.

In an embodiment of the method according to the present invention, the handover request, the forwarding messages and the handover responses are transmitted via a backbone network connecting the source base station to the target base station.

The invention further provides a system for initializing a handover of a mobile station of a cellular wireless network comprising a plurality of cells each having at least one base station, wherein a source base station to which said mobile station is registered transmits directly or indirectly a handover request to other target base stations via a backbone network.

In one embodiment of the system according to the present invention, the cells overlap each other.

In one embodiment of the system according to the present invention, the source base station and the target base station are connected via the backbone network to a gateway.

In a possible embodiment of the system according to the present invention, the gateway is connected to the Internet.

In an embodiment of the system according to the present invention, the cellular wireless network is formed by a GSM-network, an EDGE-network, a GPRS-network, a UMTS-network, an EHSGPA-network, a HSPA-network, a TDSCDMA-network, a CDMA2000-network, a WiMax-network, a 3GLTE-network, a 3GPP-network or a WLAN-network.

The invention further provides a source base station to which a mobile station is registered, wherein the source base station for initializing a handover of said mobile station transmits directly or indirectly a handover request to other target base stations via a backbone network.

In the following, preferred embodiments of the system according to the present invention are described with reference to the enclosed figures.

Figure 1 shows a signal diagram illustrating the initializing of a handover in a conventional system.

Figure 2 shows a diagram of an exemplary embodiment of a system for initializing a handover of a mobile station in a cellular wireless network according to the present invention.

Figure 3 shows a further diagram for illustrating a possible embodiment of the system for initializing a handover according to the present invention.

Figure 4 shows a signal diagram for illustrating an embodiment of a method for initializing a handover according to the present invention.

Figure 5 shows a signal diagram for illustrating a further embodiment of a method for initializing a handover according to the present invention.

Figure 6 shows a signal diagram for illustrating a further embodiment of a method for initializing a handover according to the present invention.

Figure 7 shows a signal diagram for illustrating a further embodiment of a method for initializing a handover according to the present invention.

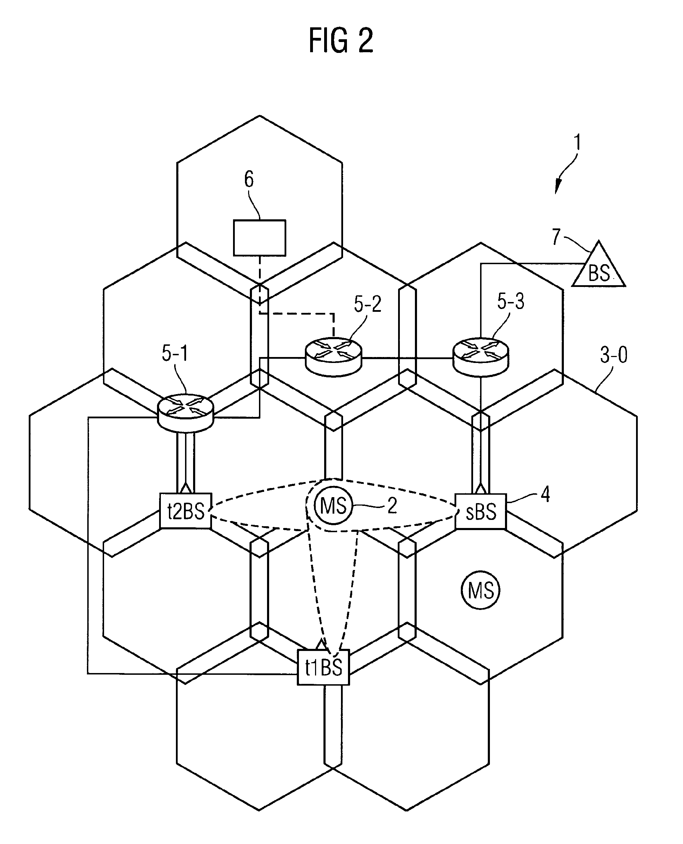

As can be seen from figure 2, a system 1 for initializing a handover of a mobile station 2 comprises a cellular wireless network. The cellular wireless network comprises a plurality of cells which can overlap each other as shown in figure 2. Each cell comprises at least one base station 3. In the given example, the mobile station 2 is registered at a source base station 3-0 via an air link 4. In the given example, the mobile station 2 is located in an overlapping area between neighboring cells, i. e. a cell of the base station 3-0, a cell of the base station 3-1 and a cell of the base station 3-2. The mobile station 2 can be any mobile device, such as a mobile phone, a laptop, a PDA. A mobile station 2 is also called in other systems a user entity UE. As can be seen, the base stations 3 are connected via routers 5 to a gateway 6 of a core network or to other base stations 7. As can be seen from figure 2, the network architecture is decentral. The base stations 3 are not connected directly via a central controller, such as an RNC with each other. The gateway 6 connects the cellular wireless network with a core network, such as the Internet. The mobile station 2 measures the reception quality of signals received from neighboring cells. The mobile station 2 generates a list of possible target base stations, such as target base station 3-1 and target base station 3-2 as shown in figure 2. In a possible embodiment, by using multi-antenna technology MIMO and corresponding methods, such as beam forming there can be overlapping regions at the boarders of cells.

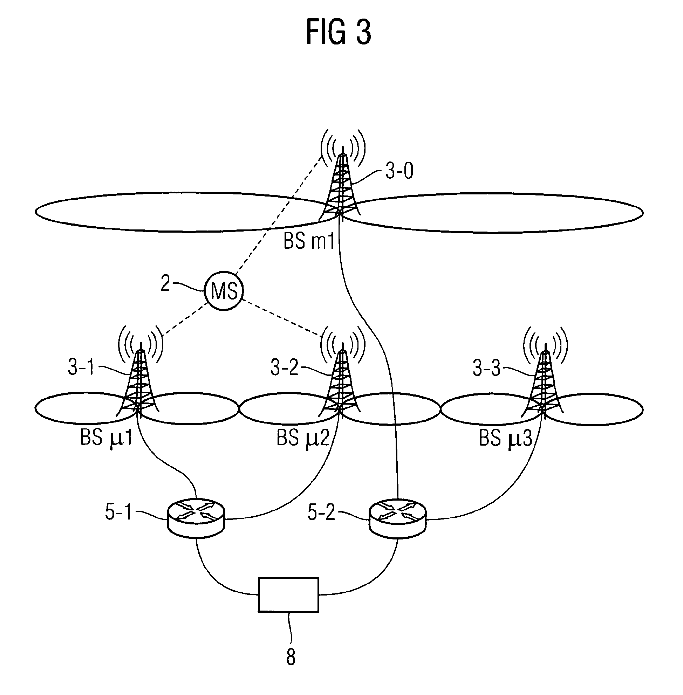

Figure 3 shows a further diagram of an embodiment of a system according to the present invention. In this embodiment, the cellular wireless network has a hierarchical architecture and comprises base stations which are connected via a router to a central control device 8 formed, for example, by an RNC.

The method according to the present invention can be employed in a system with a decentral network configuration as shown in figure 2 but also in a network having a central configuration as shown in figure 3.

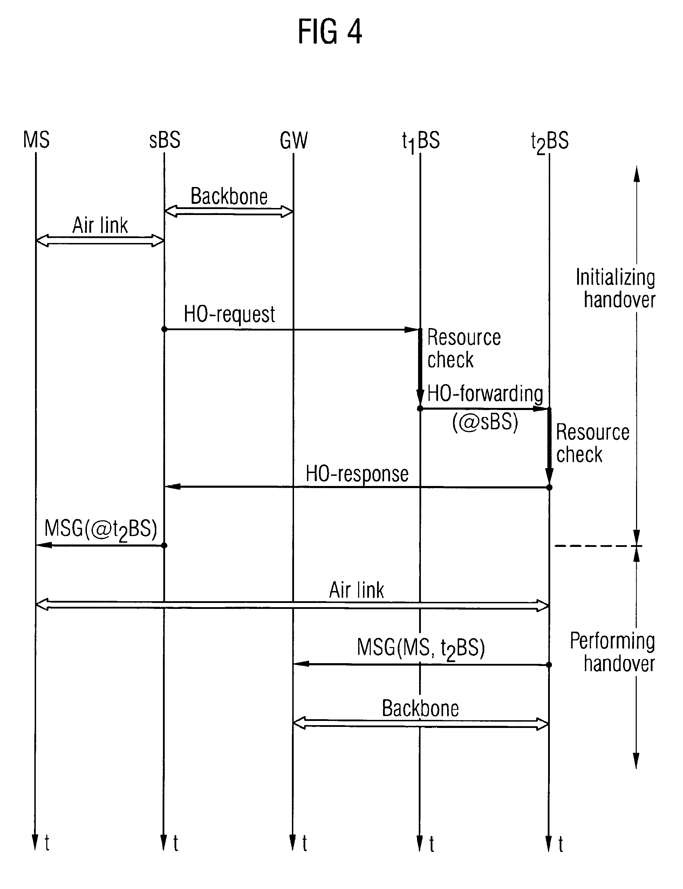

Figure 4 shows a first embodiment for initializing a handover of a mobile station 2 in a cellular wireless network according to the present invention.

In the method according to the present invention, the source base station sBS to which a mobile station MS is registered transmits directly or indirectly a handover request to other target base stations tBS via a backbone network, i. e. via the routers 5 shown in figures 2, 3.

In the embodiment shown in figure 4, the source base stations sBS transmits a handover directly to a first target base station t₁BS which checks its resources for the handover. If the first target base station t₁BS does not have sufficient resources, it forwards the handover request received from the source base station sBS to another available target base station t₂BS. The forwarded handover request also includes the address of the source base station sBS. The second target base station t₂BS performs a check of its available resources and transmits a handover response to the source base station sBS indicating that a handover is possible. The source base station sBS transmits a message MSG to the registered mobile station MS indicating the address of the second target base station t₂BS to complete the initializing of the handover.

After that, the handover from the source base station sBS to the second target base station t₂BS is performed and the gateway GW is informed by the second target base station t2BS or the source base station (sBS) that the mobile station MS is now registered to the second target base station t₂BS.

The handover request sent by the source base station sBS to the target base stations t1BS includes a cell-ID of the target base station t1BS but also other parameters determined through measurements of the mobile station MS e.g. cell-IDs of other possible target BS (t2BS, t3BS, ...). If the target base station t1BS is not capable to accept the handover request and has knowledge of another available target base station, it forwards the handover request to the available target base station. The handover request forwarding message comprises the data of the initial handover request, such as the IP-address of the source base station sBS. The new target base station is informed about the requesting source base station sBS. The signalling between the base station sBS and the gateway GW is performed via a backbone network. In the embodiment shown in figure 2, the handover request comprises a cell identifier of the first target base station t₁BS and parameters of other target base stations t₂BS measured by the mobile station MS. The available target base station t₂BS transmits the handover response directly to the source base station sBS. In an alternative embodiment, the available target base station t₂BS transmits the handover response via the first target base station t₁BS to the source base station sBS.

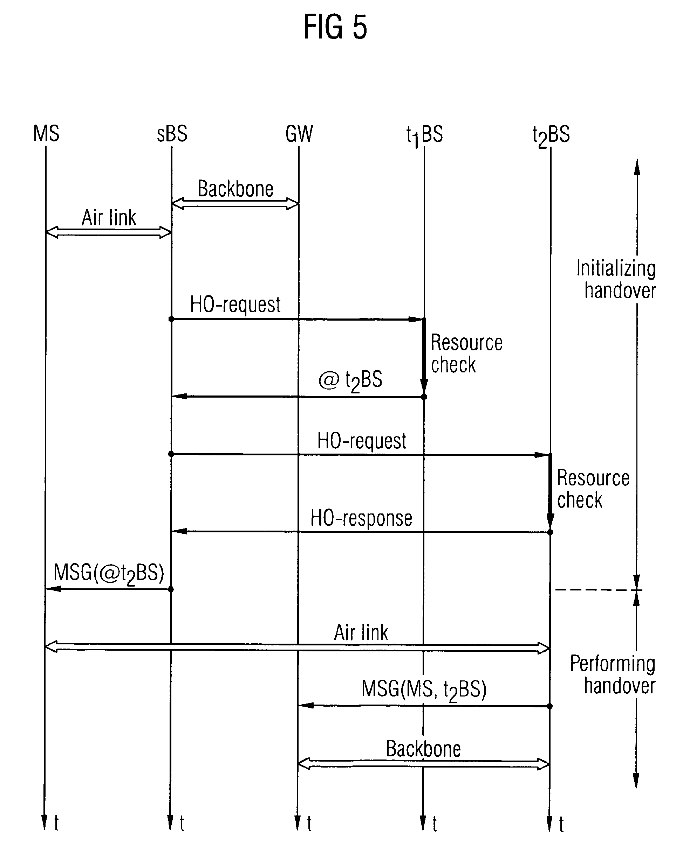

Figure 5 shows a further embodiment of the method for initializing a handover of a mobile station 2 in a cellular wireless network according to the present invention.

In this embodiment the source base station sBS sends a first handover request to at least one first target base station t₁BS which performs a check of its resources. If the first target base station t₁BS does not have sufficient resources, it transmits upon rejection of the received first handover request addresses and resource information data of other target base stations tBS, such as target base station t₂BS to the requesting source base station sBS. In the signal diagram of figure 5, the first target base station t₁BS receives a handover request from the source base station and transmits the address of another available target base station t₂BS to the requesting source base station sBS, because the first target base station t₁BS does not have sufficient resources for the requested handover.

In a further step, the source base station sBS then transmits another handover request to the target base station t₂BS indicated by the received address. The second target base station t₂BS performs a check of its resources and transmits a handover response to the requesting source base station sBS to accept the requested handover. Then, the handover itself is performed in the same manner as described with reference to figure 4.

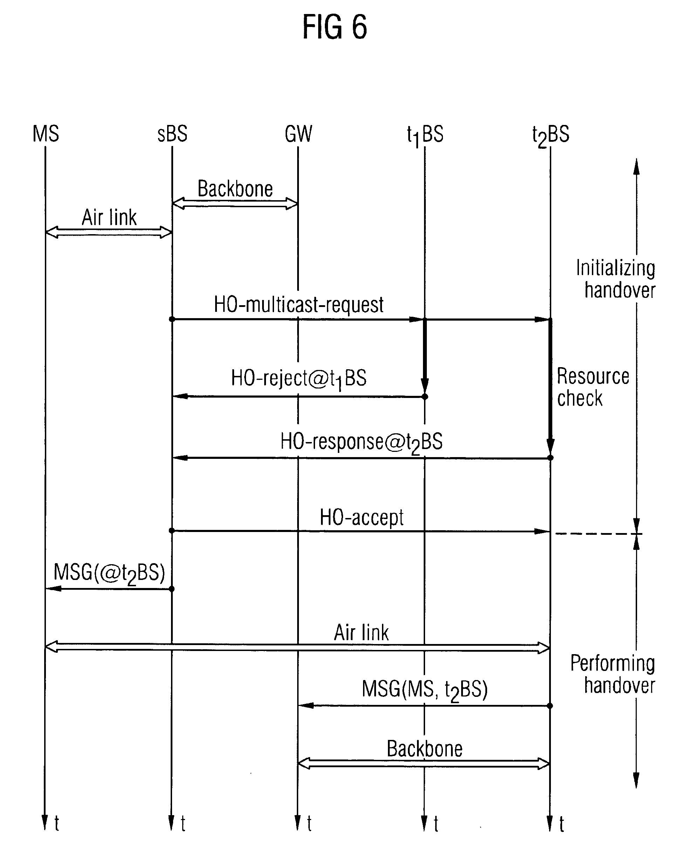

Figure 6 shows a further possible embodiment of the method according to the present invention. In this embodiment, the source base station sBS sends a multicast handover request to several target base stations tBS belonging to a multicast group of base stations. These base stations are, for example base stations which are assigned to a common gateway GW. The multicast handover request does not only contain the cell-ID of one base station BS but a list of all cell-IDs of possible target base stations within the multicast group. The multicast handover request transmitted by the source base station sBS is almost simultaneously received by all target base stations tBS in the multicast group and evaluated. If one of the target base stations tBS finds its cell-ID in the cell-ID list of the multicast handover request, it checks its resources for a possible handover. If a target base station tBS is not capable to accept a handover, it rejects the handover and sends a handover rejection message to the requesting source base station sBS. In the example of figure 6, a first target base station t₁BS of the multicast group rejects the handover request whereas a second target base station t₂BS of the multicast group accepts the handover request by sending a handover response message including the address of the second target base station t₂BS. The source base stations sBS receive one or more handover rejects and possibly one or more handover responses. The handover response includes inter alia the cell-ID and the IP-address of the base station tBS which is willing to accept the handover request, such as target base station t₂BS. The source base station sBS then selects on the basis of the received handover responses one target base station tBS to perform the handover. In a possible embodiment, the source base station sBS transmits a handover accept message to the selected target base station t₂BS as shown in figure 6.

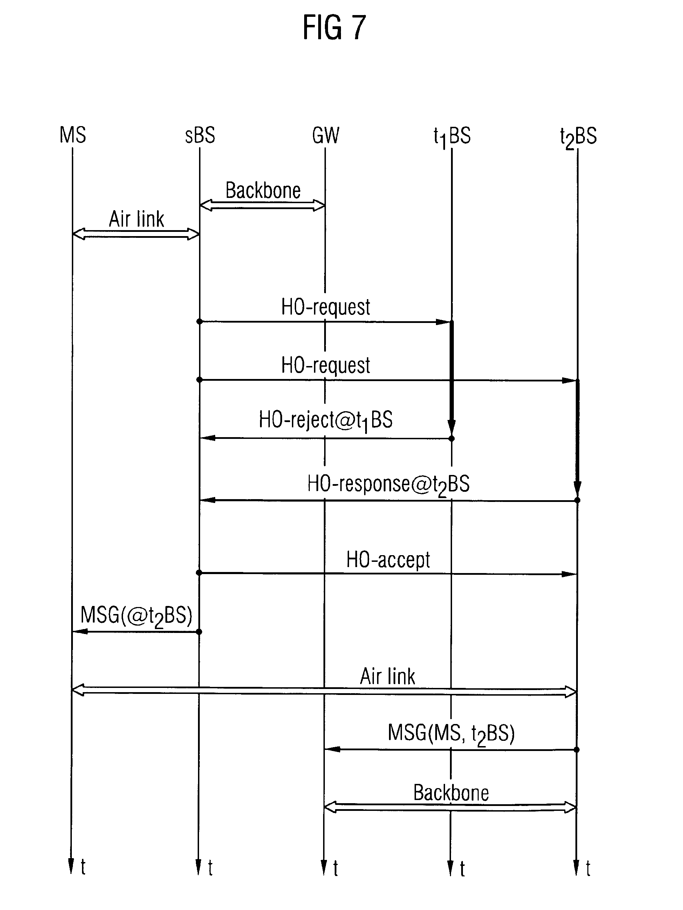

Figure 7 shows a further embodiment of the method according to the present invention for initializing a handover. In the embodiment shown in figure 7, the source base station sBS transmits several or multiple unicast handover requests to several target base stations tBS. The source base station does not send a handover request to one target base station tBS but simultaneously a further handover request to other target base stations tBS, which have been detected as potential target base stations by measurements performed by the mobile station MS. The multiple unicast request comprises the cell-IDs of the possible base stations. The multiple unicast request transmitted by the source base stations sBS is almost simultaneously received by the addressed target base stations. A unicast request received by the target base station is evaluated by the target base station. If the target base station finds its cell-ID in the transmitted list, it checks whether is has sufficient resources for performing a handover. If the target base station tBS is not able to accept a handover request, it rejects the handover request and sends a handover reject message to the requesting source base station sBS. If the addressed target base station tBS accepts the handover, it sends directly a handover response to the source base station sBS containing its IP-address and its cell-ID. The source base station sBS receives one or more handover rejects and one or more handover responses. The received handover responses contain inter alia the cell-ID and the IP-address of those base stations which are willing to accept the handover request, such as target base station t₂BS shown in figure 7. The source base station sBS selects in a further step one target base station tBS from those base stations which have sent a handover response to the source base station sBS. Then, the source base station sBS transmits a handover accept message to the selected target base station, such as target base station t₂BS shown in figure 7. Then, the handover itself is performed as described above from the source base station sBS to the selected target base station t₂BS.

The method and system according to the present invention is applicable to any kind of cellular wireless networks, in particular, for decentral cellular wireless networks. The cellular wireless network may be formed by a GSM-network, an EDGE-network, a GPRS-network, an UMTS-network, an EHSGPA-network, an HSPA-network, a TDSCDMA-network, a CDMA2000-network, a WiMax-network, a 3GLT-network, a 3GPP-network or a WLAN-network.

The method and system according to the present invention reduce significantly the data traffic and load generated by handover requests. Furthermore, time delays for performing a handover are reduced.

## Claims

1. A method for initializing a handover of a mobile station (MS) in a cellular wireless network,
wherein a source base station (sBS) to which a mobile station (MS) is registered transmits directly or indirectly a handover request (HO-REQ) to other target base stations (tBS) via a backbone network.

2. The method according to claim 1, comprising the steps of:
(a) transmitting said handover request (HO-REQ) directly to a first target base station (t₁BS);
(b) forwarding upon rejection of said handover request (HO-REQ) the handover request (HO-REQ) by said first target base station (t₁BS) to another available target base station (t₂BS) ;
(c) transmitting a handover response (HO-RES) by said available target base station (t₂BS) to said source base station (sBS).

3. The method according to claim 2,
wherein the handover request (HO-REQ) comprises a cell identifier and the network address (IP address) of the first target base station (t₁BS) and parameters and information about other target base stations (t₂BS) measured by said mobile station (MS).

4. The method according to claim 2,
wherein the handover request (HO-REQ) is forwarded by a forwarding message comprising an address (@sBS) of said source base station (sBS).

5. The method according to claim 2,
wherein said available target base station (t₂BS) transmits said handover response (HO-RES) directly to said source base station (sBS).

6. The method according to claim 2,
wherein the available target base station (t₂BS) transmits said handover response (HO-RES) via said first target base station (t₁BS) to said source base station (sBS).

7. The method according to claim 1,
comprising the steps of:
(a) transmitting a first handover request (HO-REQ1) from said source base station (sBS) to at least one first target base station (t₁BS);
(b) transmitting upon rejection of the received first handover request (HO-REQ1) by said first target base station (t₁BS) addresses and resource information data of other target base stations (t₂BS) by said first target base station (t₁BS) to said source base station (sBS);
(c) transmitting a second handover request (HO-REQ2) by said source base station (sBS) to an available target base station (t₂BS) ;
(d) transmitting a handover response (HO-RES) by the available target base station (t₂BS) to the source base station (sBS).

8. The method according to claim 1, comprising the steps of:
(a) transmitting a multicast handover request (MC-HO-REQ) by said source base station (sBS) to several target base stations (tBS) belonging to a multicast group;
(b) transmitting a handover response (HO-RES) by an available target base station (tBS) of said multicast group to said source base station (sBS).

9. The method according to claim 1,
comprising the steps of:
(a) transmitting multiple unicast handover requests from said source base station (sBS) to several target base stations (tBS);
(b) transmitting a handover response (HO-RES) having resource information data of the target base station (tBS) by at least one available target base station (t₂BS) to said source base station (sBS);
(c) selecting an available target base station (tBS) by said source base station (sBS).

10. The method according to claim 1,
wherein the cellular wireless network is formed by a decentral cellular wireless network.

11. The method according to claim 10,
wherein the cellular wireless network is formed by a mobile radio wireless network.

12. The method according to claims 1 to 11,
wherein the handover requests (HO-REQ), the forwarding messages and the handover responses (HO-RES) are transmitted via a backbone network connecting the source base station (sBS) and the target base stations (tBS).

13. A system for initializing a handover (HO) of a mobile station (MS) of a cellular wireless network comprising a plurality of cells each having at least one base station (3),
wherein a source base station (3-0) to which said mobile station (2) is registered transmits directly or indirectly a handover request (HO-REQ) to other target base stations (3-1; 3-2) via a backbone network.

14. The system according to claim 13,
wherein the cells overlap each other.

15. The system according to claim 12,
wherein the source base station (3-0) and the target base stations (3-1; 3-2) are connected via said backbone network to a gateway (6).

16. The system according to claim 15,
wherein the gateway (6) is connected to the Internet.

17. The system according to claim 12,
wherein the cellular wireless network is formed by a GSM-network, an EDGE-network, an GPRS-network, an UMTS-network, an EHSGPA-network, an HSPA-network, a TDS-CDMA-network, a CDMA2000-network, a WiMax-network, a 3GLT-network, a 3GPP-network or a WLAN-network or other radio networks.

18. Source base station (3-0) to which a mobile station (2) is registered,
wherein said source base station (3-0) for initializing a handover (HO) of said mobile station (2) transmits directly or indirectly a handover request (HO-REQ) to other target base stations (3-1; 3-2) via a backbone network.
